# EUROPEAN PATENT SPECIFICATION

(11) **EP 4 531 134 B1**
(45) Date of publication and mention of the grant of the patent: **23.09.2026**
(21) Application number: 22948511.5
(22) Date of filing: 30.06.2022
(51) Int. Cl.: H01M 4/505

(54) **ELECTROCHEMICAL APPARATUS AND ELECTRICAL APPARATUS**
ELEKTROCHEMISCHE VORRICHTUNG UND ELEKTRISCHE VORRICHTUNG
APPAREIL ÉLECTROCHIMIQUE ET APPAREIL ÉLECTRIQUE

(43) Date of publication of application: 02.04.2025
(73) Proprietor: Ningde Amperex Technology Limited, Ningde, Fujian 352100 (CN)
(72) Inventor: ZHOU, Juan, Ningde, Fujian 352100 (CN); YUAN, Guoxia, Ningde, Fujian 352100 (CN); LANG, Ye, Ningde, Fujian 352100 (CN); XU, Leimin, Ningde, Fujian 352100 (CN)
(74) Representative: Icosa
(86) International application number: PCT/CN2022/102823
(87) International publication number: WO 2024/000406

(56) References cited:
- CN-A- 102 376 948
- JP-A- 2002 068 747
- JP-A- 2002 145 619
- JP-A- 2002 167 220
- WEI AIJIA ET AL: "Effect of Mg2+/F- co-doping on electrochemical performance of LiNi0.5Mn1.5O4 for 5?V lithium-ion batteries", ELECTROCHIMICA ACTA, ELSEVIER, AMSTERDAM, NL, vol. 323, 13 August 2019 (2019-08-13), XP085833469, ISSN: 0013-4686, [retrieved on 20190813], DOI: 10.1016/J.ELECTACTA.2019.134692
- JULIEN C M ET AL: "Lattice vibrations of materials for lithium rechargeable batteries III. Lithium manganese oxides", MATERIALS SCIENCE AND ENGINEERING: B, ELSEVIER, AMSTERDAM, NL, vol. 100, no. 1, 15 June 2003 (2003-06-15), pages 69 - 78, XP004434483, ISSN: 0921-5107, DOI: 10.1016/S0921-5107(03)00077-1
- J. FISCHER ET AL: "Development of thin film cathodes for lithium-ion batteries in the material system Li-Mn-O by r.f. magnetron sputtering", THIN SOLID FILMS, vol. 528, 15 January 2013 (2013-01-15), AMSTERDAM, NL, pages 217 - 223, XP055723158, ISSN: 0040-6090, DOI: 10.1016/j.tsf.2012.08.058

## Description

### TECHNICAL FIELD

This application relates to the field of batteries, and specifically, to an electrochemical apparatus and an electrical apparatus.

### BACKGROUND

Lithium-ion batteries, due to their advantages such as light weight and high energy density, are gradually replacing lead-acid batteries in fields such as electric transportation tools, with a market penetration rate increasing year by year. Lithium manganese oxide, due to its low cost, high safety, and good low-temperature performance, has been widely used as a positive electrode material for lithium-ion batteries in fields such as electric transportation tools. However, the disadvantages of the lithium manganese oxide such as low actual capacity and fast capacity decay seriously limit the use of lithium manganese oxide.

The publication "Effect of Mg2+/F- co-doping on electrochemical performance of LiNi0.5Mn1.5O4 for 5 V lithium-ion batteries" by WEI AIJIA ET AL discloses a battery of the prior art.

### SUMMARY

In view of the problems existing in the prior art, this application provides an electrochemical apparatus and an electrical apparatus including such electrochemical apparatus. The electrochemical apparatus of this application has high initial coulombic efficiency and excellent cycling performance on the basis of high energy density.

According to a first aspect, this application provides an electrochemical apparatus including a positive electrode plate, where the positive electrode plate includes a positive electrode active material layer, and the positive electrode active material layer includes a first lithium manganese oxide and a second lithium manganese oxide; and in a fully discharged state of the electrochemical apparatus, through Raman test, the first lithium manganese oxide has a characteristic peak A in a range of 507 cm⁻¹±10 cm⁻¹ and a characteristic peak B in a range of 660 cm⁻¹±10 cm⁻¹, and the second lithium manganese oxide has a characteristic peak C in a range of 625 cm ¹±10 cm⁻¹. The characteristic peak A is a characteristic peak of an orthorhombic phase in the first lithium manganese oxide, the characteristic peak B is a characteristic peak of a monoclinic phase in the first lithium manganese oxide, and the characteristic peak C is a characteristic peak of a spinel structure in the second lithium manganese oxide. The positive electrode active material layer of the electrochemical apparatus of this application includes both the first lithium manganese oxide and the second lithium manganese oxide. On one hand, the orthorhombic phase and monoclinic phase in the first lithium manganese oxide have a high lithium storage capacity, and a solid solution formed by the coexistence of the monoclinic phase and the orthorhombic phase has oxygen vacancies. This can facilitate the deintercalation of lithium ions, thereby providing a high charge specific capacity and significantly increasing the energy density of the electrochemical apparatus. In addition, the coexistence of the monoclinic phase and the orthorhombic phase forms the solid solution, which can enhance the structural stability of the first lithium manganese oxide, thereby suppressing structural phase transitions during cycling and storage. On the other hand, the first lithium manganese oxide has a higher initial charge specific capacity and can provide lithium ions for forming a solid electrolyte interface (SEI) film during the first-cycle charge of the electrochemical apparatus. In addition, in a subsequent cycling process, the residual lithium ions in the first lithium manganese oxide can provide lithium ions for the destruction and regeneration of the SEI film, reducing the consumption of lithium ions in the second lithium manganese oxide, thereby improving the cycling performance of the electrochemical apparatus.

In some embodiments, a peak intensity of the characteristic peak A is I_{A}, and a peak intensity of the characteristic peak B is I_{B}, satisfying: 0.4≤I_{A}/I_{B}≤0.75. When I_{A}/I_{B} falls within the above range, a significant difference is present between amounts of the orthorhombic phase and monoclinic phase in the first lithium manganese oxide, and the solid solution can be formed by a synergistic effect, facilitating the deintercalation of Li ions in the lithium manganese oxide, thereby increasing the energy density of the electrochemical apparatus.

In some embodiments, in the fully discharged state of the electrochemical apparatus, a Raman spectrum of the first lithium manganese oxide has a characteristic peak in a range of 570 cm⁻¹±10 cm⁻¹. In this application, the characteristic peak in the range of 570 cm⁻¹±10 cm⁻¹ corresponds to a stretching mode of manganese ions bonded to axial oxygen atoms in the first lithium manganese oxide after discharged.

In some embodiments, in the fully discharged state of the electrochemical apparatus, a Raman spectrum of the second lithium manganese oxide has a characteristic peak in a range of 480 cm ¹±10 cm⁻¹. In this application, the characteristic peak in the range of 480 cm ¹±10 cm⁻¹ corresponds to a T_{2g} vibration mode of Li in a lattice of the second lithium manganese oxide after discharged.

In some embodiments, in the fully discharged state of the electrochemical apparatus, a 60 µm×50 µm test region is selected from a cross section of the positive electrode plate; and through Raman test, in a Raman spectrum of the test region, a peak intensity of the characteristic peak B is I_{B}, and a peak intensity of the characteristic peak C is I_{C}, satisfying: 0.06≤I_{B}/I_{C}≤0.5. A peak intensity value is positively correlated with an amount to some extent. When I_{B}/I_{C} falls within the above range, an amount of the first lithium manganese oxide is moderate, and the electrochemical apparatus has high energy density, high initial coulombic efficiency, and excellent cycling performance. In some embodiments, 0.1≤I_{B}/I_{C}≤0.5.

In some embodiments, in the fully discharged state of the electrochemical apparatus, test is performed using an X-ray diffraction method, an X-ray diffraction pattern of the positive electrode plate has a diffraction peak 1 and a diffraction peak 2 at 2θ in a range of 18.5° to 19.5°, and a peak position difference Δθ of the diffraction peak 2 and the diffraction peak 1 satisfies: 0.38°≤|Δθ|≤0.48°.

In some embodiments, in the fully discharged state of the electrochemical apparatus, a molar ratio b1 of element Li to element Mn in the positive electrode active material layer satisfies: 0.55≤b1≤0.6. The molar ratio Li/Mn falling within the above range can enhance the stability of the second lithium manganese oxide in the positive electrode active material layer, thereby improving the cycling performance of the electrochemical apparatus.

In some embodiments, the first lithium manganese oxide has a layered structure. The layered structure is conducive to the deintercalation of Li ions in the first lithium manganese oxide, thereby improving the energy density and cycling performance of the electrochemical apparatus.

In some embodiments, the first lithium manganese oxide further includes element T, where the element T includes at least one of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, or Y. The presence of the element T in the first lithium manganese oxide can facilitate the formation of the monoclinic phase, enhancing the structural stability of the first lithium manganese oxide and suppressing the dissolution of Mn, thereby improving the cycling performance of the electrochemical apparatus.

In some embodiments, a molar ratio c1 of the element T to element Mn in the first lithium manganese oxide satisfies: 0.005≤c1≤0.1.

In some embodiments, the first lithium manganese oxide includes Liₓ₁Mn_{y1}T_{z1}O₂, where 0.1≤x1≤1.1, 0.9≤y1≤1, 0≤z1≤ 0.1, and T includes at least one of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, or Y.

In some embodiments, the second lithium manganese oxide has a spinel structure. In some embodiments, the second lithium manganese oxide further includes element Q, where the element Q includes at least one of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, or Y.

In some embodiments, a molar ratio d1 of the element Q to element Mn in the second lithium manganese oxide satisfies: 0≤d1≤0.2.

In some embodiments, the second lithium manganese oxide includes Liₓ₂Mn_{y2}Q_{z2}O₄₋ₜAₜ, where 0.6≤x2≤1.2, 1.8≤y2≤2, 0≤z2≤0.2, 0≤t≤0.5, Q includes at least one of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, or Y, and A includes at least one of S, N, F, Cl, or Br.

According to a second aspect, this application provides an electrical apparatus including the electrochemical apparatus according to the first aspect.

### BRIEF DESCRIPTION OF DRAWINGS

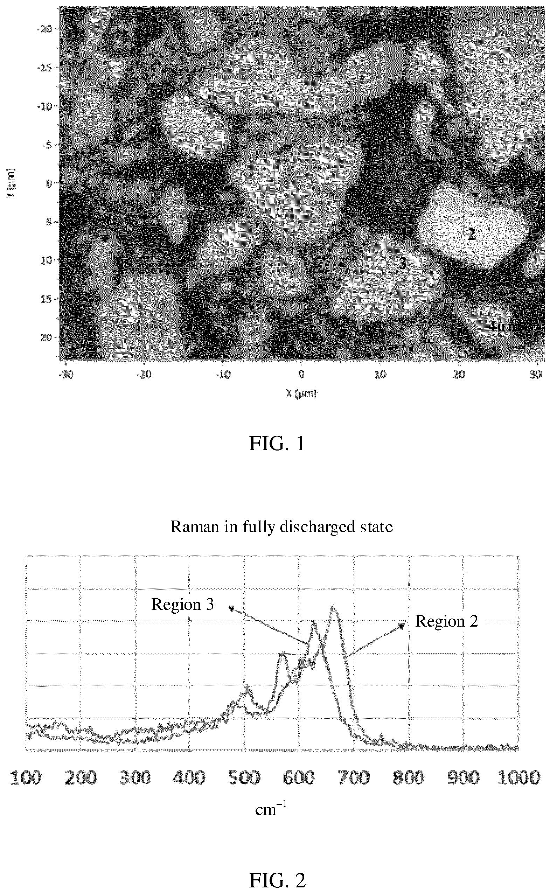

FIG. 1 is an SEM image of a cross section of a fully discharged positive electrode plate of a lithium-ion battery in Example 1.
FIG. 2 is a Raman image of region 2 and region 3 in FIG. 1.

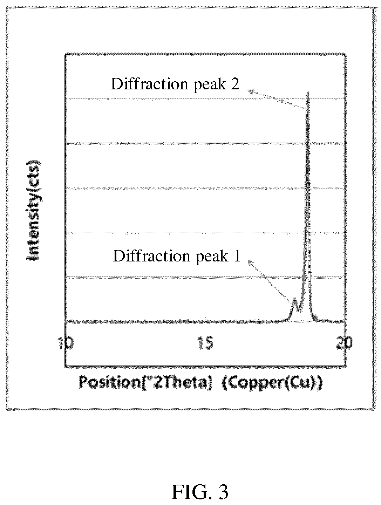

FIG. 3 is an XRD image of the fully discharged positive electrode plate of the lithium-ion battery in Example 1.

### DESCRIPTION OF EMBODIMENTS

To make the objectives, technical solutions, and advantages of this application clearer, the following clearly and completely describes the technical solutions in this application with reference to some embodiments. Apparently, the described embodiments are some but not all embodiments of this application. Some relevant embodiments described herein are illustrative and used to provide a basic understanding of this application. Some embodiments of this application should not be construed as limitations on this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the description of this specification, unless otherwise stated, "more than" or "less than" is inclusive of the present number.

Unless otherwise stated, the terms used in this application have common meanings generally understood by persons skilled in the art. Unless otherwise stated, numerical values of parameters mentioned in this application may be measured by using various measurement methods commonly used in the art (for example, they may be tested by using the methods provided in some embodiments of this application).

A list of items connected by the terms "at least one of", "at least one piece of", "at least one kind of", or the like may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single constituent or a plurality of constituents. The item B may contain a single constituent or a plurality of constituents. The item C may contain a single constituent or a plurality of constituents.

According to a first aspect, this application provides an electrochemical apparatus including a positive electrode plate, where the positive electrode plate includes a positive electrode active material layer, and the positive electrode active material layer includes a first lithium manganese oxide and a second lithium manganese oxide; and in a fully discharged state of the electrochemical apparatus, through Raman test, the first lithium manganese oxide has a characteristic peak A in a range of 507 cm⁻¹±10 cm⁻¹ and a characteristic peak B in a range of 660 cm ¹±10 cm⁻¹, and the second lithium manganese oxide has a characteristic peak C in a range of 625 cm ¹±10 cm⁻¹. The characteristic peak A is a characteristic peak of an orthorhombic phase in the first lithium manganese oxide, the characteristic peak B is a characteristic peak of a monoclinic phase in the first lithium manganese oxide, and the characteristic peak C is a characteristic peak of a spinel structure in the second lithium manganese oxide. The positive electrode active material layer of the electrochemical apparatus of this application includes both the first lithium manganese oxide and the second lithium manganese oxide. On one hand, the orthorhombic phase and monoclinic phase in the first lithium manganese oxide have a high lithium storage capacity, and a solid solution formed by the coexistence of the monoclinic phase and the orthorhombic phase has oxygen vacancies. This can facilitate the deintercalation of lithium ions, thereby providing a high charge specific capacity and significantly increasing the energy density of the electrochemical apparatus. In addition, the coexistence of the monoclinic phase and the orthorhombic phase forms the solid solution, which can enhance the structural stability of the first lithium manganese oxide, thereby suppressing structural phase transitions during cycling and storage. On the other hand, the first lithium manganese oxide has a higher initial charge specific capacity and can provide lithium ions for forming a solid electrolyte interface (SEI) film during the first-cycle charge of the electrochemical apparatus. In addition, in a subsequent cycling process, the residual lithium ions in the first lithium manganese oxide can provide lithium ions for the destruction and regeneration of the SEI film, reducing the consumption of lithium ions in the second lithium manganese oxide, thereby improving the cycling performance of the electrochemical apparatus.

In some embodiments, a peak intensity of the characteristic peak A is I_{A}, and a peak intensity of the characteristic peak B is I_{B}, satisfying: 0.4≤I_{A}/I_{B}≤0.75. In some embodiments, I_{A}/I_{B} is 0.45, 0.5, 0.55, 0.6, 0.65, or 0.7, or a range defined by any two of these values. When I_{A}/I_{B} falls within the above range, a significant difference is present between amounts of the orthorhombic phase and monoclinic phase in the first lithium manganese oxide, and the solid solution can be formed by a synergistic effect, facilitating the deintercalation of Li ions in the lithium manganese oxide, thereby increasing the energy density of the electrochemical apparatus.

In some embodiments, in the fully discharged state of the electrochemical apparatus, a Raman spectrum of the first lithium manganese oxide has a characteristic peak in a range of 570 cm⁻¹±10 cm⁻¹. In this application, the characteristic peak in the range of 570 cm⁻¹±10 cm⁻¹ corresponds to a stretching mode of manganese ions bonded to axial oxygen atoms in the first lithium manganese oxide after discharged.

In some embodiments, in the fully discharged state of the electrochemical apparatus, a Raman spectrum of the second lithium manganese oxide has a characteristic peak in a range of 480 cm⁻¹±10 cm⁻¹. In this application, the characteristic peak in the range of 480 cm⁻¹±10 cm⁻¹ corresponds to a T_{2g} vibration mode of Li in a lattice of the second lithium manganese oxide after discharged.

In some embodiments, in the fully discharged state of the electrochemical apparatus, a 60 µm×50 µm test region is selected from a cross section of the positive electrode plate; and through Raman test, in a Raman spectrum of the test region, a peak intensity of the characteristic peak B is I_{B}, and a peak intensity of the characteristic peak C is I_{C}, satisfying: 0.06≤I_{B}/I_{C}≤0.5. A peak intensity value is positively correlated with an amount to some extent. When I_{B}/I_{C} falls within the above range, an amount of the first lithium manganese oxide is moderate, and the electrochemical apparatus has high energy density, high initial coulombic efficiency, and excellent cycling performance. In some embodiments, I_{B}/I_{C} is 0.08, 0.15, 0.2, 0.25, 0.3, 0.35, 0.4, or 0.45, or a range defined by any two of these values. In some embodiments, 0.1≤I_{B}/I_{C}≤0.5.

In some embodiments, in the positive electrode active material layer, based on a total mass of the first lithium manganese oxide and the second lithium manganese oxide, a mass percentage of the first lithium manganese oxide is 5% to 30%, for example, 7%, 9%, 13%, 17%, 19%, 23%, 17%, or 29%, or a range defined by any two of these values.

In some embodiments, in the fully discharged state of the electrochemical apparatus, test is performed using an X-ray diffraction method, an X-ray diffraction pattern of the positive electrode plate has a diffraction peak 1 and a diffraction peak 2 at 2θ in a range of 18.5° to 19.5°, and a peak position difference Δθ of the diffraction peak 2 and the diffraction peak 1 satisfies: 0.38°≤|Δθ|≤0.48°. In some embodiments, |Δθ| is 0.39°, 0.40°, 0.41°, 0.42°, 0.43°, 0.44°, 0.45°, 0.46°, or 0.47°, or a range defined by any two of these values.

In some embodiments, in the fully discharged state of the electrochemical apparatus, a molar ratio b1 of element Li to element Mn in the positive electrode active material layer satisfies: 0.55≤b1≤0.6. In some embodiments, b1 is 0.555, 0.56, 0.565, 0.57, 0.575, 0.58, 0.585, 0.59, or 0.595, or a range defined by any two of these values. The molar ratio Li/Mn falling within the above range can enhance the stability of the second lithium manganese oxide in the positive electrode active material layer, thereby improving the cycling performance of the electrochemical apparatus.

In some embodiments, the first lithium manganese oxide has a layered structure. The layered structure is conducive to the deintercalation of Li ions in the first lithium manganese oxide, thereby improving the energy density and cycling performance of the electrochemical apparatus.

In some embodiments, the first lithium manganese oxide further includes element T, where the element T includes at least one of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, or Y. The presence of the element T in the first lithium manganese oxide can facilitate the formation of the monoclinic phase, enhancing the structural stability of the first lithium manganese oxide and suppressing the dissolution of Mn, thereby improving the cycling performance of the electrochemical apparatus.

In some embodiments, a molar ratio c1 of the element T to element Mn in the first lithium manganese oxide satisfies: 0.005≤c1≤0.1. In some embodiments, c1 is 0.006, 0.007, 0.008, 0.009, 0.01, 0.011, 0.012, 0.013, 0.014, 0.015, 0.016, 0.017, 0.018, 0.019, 0.02, 0.03, 0.05, 0.08, 0.1, or a range defined by any two of these values.

In some embodiments, the first lithium manganese oxide includes Liₓ₁Mn_{y1}T_{z1}O₂, where 0.1≤x1≤1.1, 0.9≤y1≤1, 0≤z1≤ 0.1, and T includes at least one of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, or Y.

In some embodiments, a preparation method of the first lithium manganese oxide includes: mixing a manganese-containing oxide, a lithium source, and a selectable element T source to obtain a mixture; and calcining the mixture under a first atmospheric condition and a first temperature condition to obtain the first lithium manganese oxide; where the manganese-containing oxide and the lithium source are mixed at a molar ratio Li/Mn in a range of 0.90-1.15, and the first atmospheric condition is an inert atmosphere.

In some embodiments, the inert atmosphere includes at least one of nitrogen, argon, or helium.

In some embodiments, the first temperature is 880°C to 1100°C, for example, 900°C, 950°C, 1000°C, or 1050°C. In some embodiments, the calcining time is 5 hours to 20 hours, for example, 6 hours, 8 hours, 10 hours, 12 hours, 14 hours, 16 hours, or 18 hours.

In some embodiments, the manganese-containing oxide includes Mn₃O₄. In some embodiments, the lithium source includes at least one of lithium hydroxide, lithium carbonate, lithium acetate, lithium nitrate, or lithium sulfate.

In some embodiments, the element T source includes at least one of oxides of element T, hydroxides of element T, or carbonates of element T. In some embodiments, the element T includes at least one of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, or Y. In some embodiments, the element T source includes at least one of CrO₂, Al₂O₃, MgO, TiO₂, or Y₂O₃.

In some embodiments, the second lithium manganese oxide has a spinel structure. In some embodiments, the second lithium manganese oxide further includes element Q, where the element Q includes at least one of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, or Y.

In some embodiments, a molar ratio d1 of the element Q to element Mn in the second lithium manganese oxide satisfies: 0≤d1≤0.2.

In some embodiments, the second lithium manganese oxide includes Liₓ₂Mn_{y2}Q_{z2}O₄₋ₜAₜ, where 0.6≤x2≤1.2, 1.8≤y2≤2, 0≤z2≤0.2, 0≤t≤0.5, Q includes at least one of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, or Y, and A includes at least one of S, N, F, Cl, or Br.

In some embodiments, the positive electrode plate further includes a positive electrode current collector, where the positive electrode current collector may be a metal foil current collector or a composite current collector. For example, an aluminum foil may be used. The composite current collector may be formed by forming a metal material (copper, copper alloy, nickel, nickel alloy, titanium, titanium alloy, silver, silver alloy, or the like) on a polymer matrix.

The electrochemical apparatus of this application further includes a negative electrode plate, where the negative electrode plate includes a negative electrode active material layer and a negative electrode current collector.

In some embodiments, the negative electrode active material layer includes a negative electrode active material, a conductive agent, and a binder. In some embodiments, the negative electrode active material includes a material for reversible intercalation/deintercalation of lithium ions, lithium metal, lithium metal alloy, or transition metal oxide. In some embodiments, the negative electrode active material includes at least one of a carbon material or a silicon material, where the carbon material includes at least one of graphite or hard carbon, and the silicon material includes at least one of silicon, silicon-oxygen compound, silicon-carbon compound, or silicon alloy. In some embodiments, the binder may include various binder polymers. In some embodiments, the binder includes at least one of polyvinylidene fluoride, vinylidene fluoride-hexafluoropropylene copolymer, polyamide, polyacrylonitrile, polyacrylate ester, polyacrylic acid, polyacrylate salt, sodium carboxymethylcellulose, polyvinylpyrrolidone, polyvinyl ether, polytetrafluoroethylene, polyhexafluoropropylene, or styrene-butadiene rubber. In some embodiments, the conductive agent may use any conductive material, as long as it causes no chemical change. In some embodiments, the conductive agent includes at least one of conductive carbon black, acetylene black, carbon nanotubes, Ketjen black, carbon fibers, or graphene.

In some embodiments, the negative electrode current collector may be copper foil, nickel foil, stainless steel foil, titanium foil, nickel foam, copper foam, a polymer substrate coated with a conductive metal, or a combination thereof.

The electrochemical apparatus of this application further includes an electrolyte solution. The electrolyte solution includes a lithium salt and a non-aqueous solvent.

In some embodiments of this application, the lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, LiBOB, or lithium difluoroborate. For example, LiPF₆ may be selected as the lithium salt.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is dimethyl carbonate (DMC), diethyl carbonate (DEC), dipropyl carbonate (DPC), methyl propyl carbonate (MPC), ethyl propyl carbonate (EPC), methyl ethyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments, in the electrochemical apparatus, a separator is provided between a positive electrode and a negative electrode to prevent a short circuit. A material and shape of the separator used in some embodiments of this application is not specifically limited, and any technology disclosed in the prior art may be used for the separator. In some embodiments, the separator includes a polymer or an inorganic substance formed by a material stable to the electrolyte of this application. For example, the separator may include a substrate layer and a surface treatment layer. The substrate layer is a non-woven fabric, film, or composite film with a porous structure. The substrate layer is made of at least one of polyethylene, polypropylene, polyethylene terephthalate, or polyimide. Specifically, a polypropylene porous film, a polyethylene porous film, polypropylene non-woven fabric, polyethylene non-woven fabric, or a polypropylene-polyethylene-polypropylene porous composite film may be selected. The surface treatment layer is provided on at least one surface of the substrate layer, and the surface treatment layer may be a polymer layer or an inorganic substance layer, or may be a layer formed by mixing a polymer and an inorganic substance. The inorganic substance layer includes inorganic particles and a binder. The inorganic particles include at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, and a material of the polymer includes at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

In some embodiments, the electrochemical apparatus of this application includes but is not limited to all types of primary batteries or secondary batteries. In some embodiments, the electrochemical apparatus is a lithium secondary battery. In some embodiments, the lithium secondary battery includes but is not limited to a lithium metal secondary battery, a lithium-ion secondary battery, a lithium polymer secondary battery, or a lithium-ion polymer secondary battery.

According to a second aspect, an electrical apparatus of this application may be any apparatus using the electrochemical apparatus according to the first aspect of this application.

In some embodiments, the electrical apparatus includes but is not limited to a notebook computer, a pen-input computer, a mobile computer, an e-book player, a portable phone, a portable fax machine, a portable copier, a portable printer, a head-mounted stereo headset, a video recorder, a liquid crystal display television, a portable cleaner, a portable CD player, a mini disc, a transceiver, an electronic notebook, a calculator, a storage card, a portable recorder, a radio, a backup power supply, a motor, an automobile, a motorcycle, a motor bicycle, a bicycle, a lighting apparatus, a toy, a game console, a clock, an electric tool, a flash lamp, a camera, a large household storage battery, or a lithium-ion capacitor.

### Examples and comparative examples

### Preparation examples 1 to 6

### Preparation of layered lithium manganese oxide

Step (1): Mn(OOH) was placed in a corundum crucible, heated to 500°C at a heating velocity of 5°C/min in an air atmosphere, and kept at a constant temperature for 1 h to obtain anhydrous Mn₃O₄.

Step (2): Anhydrous Mn₃O₄ and LiOH were weighed according to a molar ratio of Li:Mn being 1.05:1, and an additive containing element T was weighed according to a specified molar ratio of element T to element Mn (the type of the additive and the molar ratio of the element T to the element Mn were shown in Table 1). Then, the materials were mixed in a mixing device for 8 h to obtain a mixture precursor. The precursor was placed in the corundum crucible, with nitrogen gas filled at a speed of 2 m³/h, heated to 940°C at a heating velocity of 5°C/min and kept at a constant temperature for 10 h, and then naturally cooled to room temperature, to obtain the layered lithium manganese oxide.

**Table 1**

| Preparation example | Composition | Additive | |
|---|---|---|---|
| | | Type | Molar ratio of element T to element Mn |
| Preparation example 1 | LiMnAl_{0.011}O₂ | Al₂O₃ | 0.011 |
| Preparation example 2 | LiMnAl_{0.013}O₂ | Al₂O₃ | 0.013 |
| Preparation example 3 | LiMnAl_{0.008}O₂ | Al₂O₃ | 0.008 |
| Preparation example 4 | LiMnAl_{0.018}O₂ | Al₂O₃ | 0.018 |
| Preparation example 5 | LiMnTi_{0.011}O₂ | TiO₂ | 0.011 |
| Preparation example 6 | LiMnNb_{0.011}O₂ | NbCl₅ | 0.011 |

### Example 1

### 1. Lithium-ion soft pack battery

### Preparation of positive electrode

A positive electrode active material, conductive carbon black (Super P), carbon nanotubes (CNT), and polyvinylidene fluoride (PVDF) were mixed at a weight ratio of 95:1.8:1.2:2, and then N-methylpyrrolidone (NMP) was added as a solvent to prepare a slurry with a solid content of 0.75. The slurry was stirred well to obtain a slurry. The positive electrode active material was a mixture of spinel lithium manganese oxide (LiMn₂O₄) and the layered lithium manganese oxide prepared in preparation example 1, and a mass percentage of the layered lithium manganese oxide was 30% based on the mass of the mixture.

The slurry was uniformly applied on a positive electrode current collector aluminum foil, followed by processes such as drying at 90°C, cold pressing, and cutting, to obtain a positive electrode plate.

### Preparation of negative electrode

A negative electrode active material graphite, conductive carbon black (Super P), and styrene-butadiene rubber (SBR) were mixed at a weight ratio of 97:1.0:2.0, and then deionized water was added as a solvent to prepare a slurry with a solid content of 0.8. The slurry was stirred well to obtain a slurry.

The slurry was uniformly applied on a negative electrode current collector copper foil, followed by processes such as drying at 80°C, cold pressing, and cutting, to obtain a negative electrode plate.

### Preparation of electrolyte solution

In an argon atmosphere glove box with a moisture content less than 10 ppm, ethylene carbonate (EC), propylene carbonate (PC), diethyl carbonate (DEC), ethyl propionate (EP), and propyl propionate (PP) were mixed well at a mass ratio of 1:1:1:1:1. Then, a fully dried lithium salt LiPF₆ was dissolved in the foregoing non-aqueous solvent to obtain an electrolyte solution, where a mass percentage of LiPF₆ was 12.5wt%.

### Preparation of separator

A polyethylene (PE) porous polymer film was used as a separator.

### Preparation of lithium-ion battery

The positive electrode plate, the separator, and the negative electrode plate were stacked in sequence, so that the separator was located between the positive electrode plate and the negative electrode plate for separation. The resulting stack was wound to obtain an electrode assembly. The electrode assembly was placed in an outer packaging aluminum-plastic film, and an electrolyte solution was injected. Then, processes such as vacuum packaging, standing, formation, degassing, and trimming to obtain a lithium-ion soft pack battery.

### 2. Lithium-ion button battery

First, a positive electrode active material (the positive electrode active material was a mixture of spinel lithium manganese oxide (LiMn₂O₄) and the layered lithium manganese oxide prepared in preparation example 1, and a mass ratio of the spinel lithium manganese oxide (LiMn₂O₄) to the layered lithium manganese oxide prepared in preparation example 1 was 70:30), polyvinylidene fluoride (PVDF), and conductive carbon black were mixed at a mass ratio of 90:5:5, and then the solvent N-methylpyrrolidone (NMP) was added. The resulting mixture was stirred in a vacuum mixer to obtain a uniform positive electrode slurry. The positive electrode slurry was applied on one surface of an aluminum foil with a thickness of 13 µm. Then, the aluminum foil was dried in a vacuum drying oven at 90°C and then cold pressed and cut into small discs with a diameter of 1.4 cm. A lithium plate, a polypropylene separator, and an electrolyte solution (the composition was the same as the above lithium-ion soft pack battery) were assembled into a lithium-ion button battery.

### Examples 2 to 4

Examples 2 to 4 differed from example 1 only in that the mass percentages of the layered lithium manganese oxides in the positive electrode active materials were different and were 20%, 10%, and 5% respectively.

### Examples 5 to 9

Examples 5 to 9 differed from example 3 only in that the layered lithium manganese oxides in the positive electrode active materials were the layered lithium manganese oxides of preparation examples 2, 3, 4, 5, and 6.

### Comparative example 1

Comparative example 1 differed from example 1 only in that the positive electrode active material was only the spinel lithium manganese oxide (LiMn₂O₄).

### Comparative example 2

Comparative example 2 differed from example 1 only in that the positive electrode active materials was only the layered lithium manganese oxide of preparation example 1.

### Comparative example 3

Comparative example 3 differed from example 1 only in that the positive electrode active material was a mixture of the spinel lithium manganese oxide (LiMn₂O₄) and a conventional layered lithium manganese oxide.

The conventional layered lithium manganese oxide was prepared as follows: Mn₂O₃ and Na₂CO₃ were mixed well at a ratio of Na:Mn=1.05:1, and then the resulting mixture was heated to 800°C at a heating velocity of 5°C/min in an N₂ atmosphere and kept at a constant temperature for 24 h to obtain NaMnO₂; an LiBr ethanol solution with a concentration of 5 mol/L was added at a molar ratio of LiBr:NaMnO₂=10:1, exchange was performed at 180°C for 8 h in an air atmosphere, and the obtained product was washed with a large amount of ethanol after completion of exchange; and powder obtained after washing was dried for 5 h in an oven at 120°C to obtain the conventional layered lithium manganese oxide.

### Test methods

### 1. Raman test

After fully discharged, the lithium-ion soft pack battery in each of the above examples and comparative examples was disassembled to obtain the fully discharged positive electrode plate, and the fully discharged positive electrode plate was cut along a direction perpendicular to the surface of the current collector to obtain the cross section of the positive electrode plate; the first lithium manganese oxide, the second lithium manganese oxide, and the 60 µm×50 µm test region were selected from the cross section of the positive electrode plate, then Raman characterization was performed to obtain the Raman spectrum of the fully discharged positive electrode plate, and I_{A}/I_{B} and I_{B}/I_{C} were calculated based on the Raman spectrum. The fully discharged condition was as follows: At 25°C, the lithium-ion soft pack battery was discharged to 2.8 V at a constant current of 1C.

Instrument model was HR Evolution; and a laser was a solid-state laser (1 MHz) with power of 100 mW.

### 2. XRD test

After fully discharged, the lithium-ion soft pack battery in each of the above examples and comparative examples was disassembled to obtain the fully discharged positive electrode plate, and XRD test was performed on the fully discharged positive electrode plate to obtain the XRD pattern of the fully discharged positive electrode plate. The fully discharged condition was as follows: At 25°C, the lithium-ion soft pack battery was discharged to 2.8 V at a constant current of 1C.

XRD test instrument model was Bruker, D8, with a scanning velocity of 2°/min and a scanning angle range of 10° to 90°.

### 3. Element content test

Test was performed using SEM-EDS to obtain contents of elements such as element T and element Mn in the layered lithium manganese oxide of the positive electrode plate.

### 4. Test of initial charge specific capacity and initial coulombic efficiency

At a constant temperature of 25°C, the lithium-ion button battery in each of the examples and comparative examples was charged to 4.3 V at a constant current of 0.5C (that is, a current value obtained after a theoretical capacity was completely discharged in 2 h), and then charged to a cut-off current of 0.05C at a constant voltage of 4.3 V. An initial charge capacity of the lithium-ion button battery was recorded. Then, the lithium-ion button battery was discharged to 3 V at a constant current of 0.2C, and an initial discharge capacity was recorded.

Initial charge specific capacity=initial charge capacity/mass of positive electrode active material.

Initial coulombic efficiency=(initial discharge capacity/initial charge capacity)×100%.

### 5. Cycling performance test

The lithium-ion soft pack battery in each of the above examples and comparative examples was repeatedly charged and discharged through the following steps, and a discharge capacity retention rate of the battery was calculated.

First, in an environment at 25°C, the battery was subjected to the first charge and discharge cycle. The battery was first charged to 4.2 V at a constant current of 0.5C, then charged to a cut-off current of 0.05C at a constant voltage of 4.2V, and then discharged to 2.8 V at a constant current of 1C. A discharge capacity of the first cycle was recorded. Then, 1500 charge and discharge cycles was performed, and a discharge capacity at the 1500th cycle was recorded.

Cycling capacity retention rate=(discharge capacity at the 1500th cycle/discharge capacity at the first cycle)×100%.

### Test results

**Table 2**

| Example | Raman peak position of fully discharged electrode plate (cm⁻¹) | | | I_{A}/I_{B} | I_{B}/I_{C} | Element T in layered lithium manganese oxide | | Δθ (°) | Molar ratio b1 of Li/Mn | Initial charge specific capacity (mAh/g) | Initial coulombic efficiency (%) | Cycling capacity retention rate (%) |
|---|---|---|---|---|---|---|---|---|---|---|---|---|
| | Characteristic peak A (507±10) | Characteristic peak B (660±10) | Characteristic peak C (625±10) | | | Type | Molar ratio of T/Mn | | | | | |
| Example 1 | V | V | V | 0.57 | 0.471 | Al | 0.011 | 0.41 | 0.587 | 131.4 | 82.5 | 85.6 |
| Example 2 | V | V | V | 0.56 | 0.325 | Al | 0.011 | 0.39 | 0.579 | 129.4 | 85.4 | 88.0 |
| Example 3 | V | V | V | 0.54 | 0.134 | Al | 0.011 | 0.42 | 0.565 | 124.3 | 90 | 82.9 |
| Example 4 | V | V | V | 0.62 | 0.089 | Al | 0.011 | 0.42 | 0.561 | 121.7 | 91.0 | 80.2 |
| Example 5 | V | V | V | 0.71 | 0.095 | Al | 0.013 | 0.46 | 0.562 | 120.9 | 90.5 | 80.9 |
| Example 6 | V | V | V | 0.41 | 0.091 | Al | 0.008 | 0.43 | 0.563 | 121.3 | 89.3 | 80.4 |
| Example 7 | V | V | V | 0.75 | 0.067 | Al | 0.018 | 0.39 | 0.561 | 121.7 | 90.0 | 80.3 |
| Example 8 | V | V | V | 0.53 | 0.214 | Ti | 0.011 | 0.46 | 0.562 | 120.8 | 89.5 | 81.7 |
| Example 9 | V | V | V | 0.55 | 0.239 | Nb | 0.011 | 0.42 | 0.559 | 120.5 | 88.7 | 81.3 |
| Comparative example 1 | / | / | V | / | / | / | / | / | 0.511 | 112 | 96.0 | 65.0 |
| Comparative example 2 | V | V | / | 0.7 | / | Al | 0.013 | / | 0.981 | 190.3 | 48.0 | 21.0 |
| Comparative example 3 | / | V | V | / | 0.097 | / | / | 0.40 | 0.559 | 116.7 | 88.9 | 72.5 |

In the table, V represents the presence of a corresponding characteristic peak, / represents the absence of a corresponding characteristic peak or parameter, I_{A}/I_{B} is the peak intensity ratio of the characteristic peak A to the characteristic peak B in the Raman spectrum, I_{B}/I_{C} is the peak intensity ratio of the characteristic peak B to the characteristic peak C in the Raman spectrum, and Δθ is the peak position difference of the diffraction peak 1 and the diffraction peak 2 at 2θ in the range of 18.5° to 19.5° in the X-ray diffraction pattern of the fully discharged electrode plate.

The positive electrode active material in each of examples 1 to 9 contains both a lithium manganese oxide with a layered structure and a lithium manganese oxide with a spinel structure. The positive electrode active material in comparative example 1 does not contain the lithium manganese oxide with the layered structure, and the lithium manganese oxide with the layered structure is only used as the positive electrode active material in comparative example 2. It can be seen from the comparison of the data between examples 1 to 9 and comparative example 1 that the combined use of the lithium manganese oxide with the layered structure and the lithium manganese oxide with the spinel structure can significantly increase the charge specific capacity, thereby significantly increasing the energy density of the lithium-ion battery. In addition, with a higher initial charge specific capacity, the lithium manganese oxide with the layered structure can provided lithium ions for forming a solid electrolyte interface (SEI) film during the first-cycle charge of the lithium-ion battery. In addition, in a subsequent cycling process, the residual lithium ions in the lithium manganese oxide with the layered structure can provide lithium ions for the destruction and regeneration of the SEI film, reducing the consumption of lithium ions in the lithium manganese oxide with the spinel structure, thereby significantly improving the cycling performance of the lithium-ion battery.

In comparative example 3, a conventional layered lithium manganese oxide without orthorhombic phase is used and has no characteristic peak A in the range of 507 cm⁻¹±10 cm⁻¹ in its Raman spectrum. It can be seen from comparison between comparative example 3 and examples 1 to 9 that examples 1 to 9 with the coexistence of the orthorhombic phase and the monoclinic phase have significantly improved initial charge specific capacity and improved cycling performance. The possible reason is that the solid solution formed by the coexistence of the monoclinic phase and the orthorhombic phase has oxygen vacancies. This can facilitate the deintercalation of lithium ions, thereby providing a high charge specific capacity and significantly increasing the energy density of the lithium-ion battery. In addition, the coexistence of the monoclinic phase and the orthorhombic phase forms the solid solution, which can enhance the structural stability of the lithium manganese oxide with the layered structure, thereby suppressing structural phase transitions during cycling and storage. Moreover, it can be seen from the data of examples 1 to 9 that when I_{B}/I_{C} is in the range of 0.06-0.5, the lithium-ion battery has a high first-cycle charge specific capacity, and its cycling performance is also significantly improved.

The difference between examples 1 to 4 lies in the mixing ratio of the lithium manganese oxide with the layered structure and the lithium manganese oxide with the spinel structure. Based on the total mass of the lithium manganese oxide with the layered structure and the lithium manganese oxide with the spinel structure, the mass percentages of the lithium manganese oxides with the layered structures in examples 1, 2, 3, and 4 are 30%, 20%, 10%, and 5%, respectively. It can be seen from the data of examples 1 to 4 that a higher amount of the lithium manganese oxide with the layered structure means that the lithium-ion battery has a higher initial charge specific capacity, and its cycling performance is also correspondingly improved.

Although some illustrative embodiments of this application have been illustrated and described, this application is not limited to the disclosed embodiments. On the contrary, persons of ordinary skill in the art will recognize that some modifications and changes can be made to the described embodiments without departing from the scope of the appended claims.

## Claims

1. An electrochemical apparatus, comprising a positive electrode plate, wherein the positive electrode plate comprises a positive electrode active material layer, and **characterized in that**, the positive electrode active material layer comprises a first lithium manganese oxide and a second lithium manganese oxide; and in a fully discharged state of the electrochemical apparatus, a Raman spectrum of the first lithium manganese oxide has a characteristic peak A in a range of 507 cm⁻¹±10 cm⁻¹ and a characteristic peak B in a range of 660 cm ¹±10 cm⁻¹, and a Raman spectrum of the second lithium manganese oxide has a characteristic peak C in a range of 625 cm⁻¹±10 cm⁻¹.

2. The electrochemical apparatus according to claim 1, **characterized in that**, a peak intensity of the characteristic peak A is I_{A}, and a peak intensity of the characteristic peak B is I_{B}, and 0.4≤I_{A}/I_{B}≤0.75.

3. The electrochemical apparatus according to claim 1 or 2, **characterized in that**, in the fully discharged state of the electrochemical apparatus, the Raman spectrum of the first lithium manganese oxide has a characteristic peak in a range of 570 cm⁻¹±10 cm⁻¹.

4. The electrochemical apparatus according to any one of claims 1-3, **characterized in that**, in the fully discharged state of the electrochemical apparatus, the Raman spectrum of the second lithium manganese oxide has a characteristic peak in a range of 480 cm⁻¹±10 cm⁻¹.

5. The electrochemical apparatus according to any one of claims 1-4, **characterized in that**, in the fully discharged state of the electrochemical apparatus, a 60 µm×50 µm test region is selected from a cross section of the positive electrode plate; and in a Raman spectrum of the test region, a peak intensity of the characteristic peak B is I_{B}, and a peak intensity of the characteristic peak C is I_{C}, and 0.06≤I_{B}/I_{C}≤0.5.

6. The electrochemical apparatus according to claim 5, **characterized in that**, 0.1≤I_{B}/I_{C}≤0.5.

7. The electrochemical apparatus according to any one of claims 1-6, **characterized in that**, in the fully discharged state of the electrochemical apparatus, an X-ray diffraction pattern of the positive electrode plate has a first diffraction peak and a second diffraction peak in a 2θ range of 18.5° to 19.5°, and a peak position difference of the second diffraction peak and the first diffraction peak is Δθ, and 0.38°≤|Δθ|≤0.48°.

8. The electrochemical apparatus according to any one of claims 1-7, **characterized in that**, in the fully discharged state of the electrochemical apparatus, a molar ratio of element Li to element Mn in the positive electrode active material layer is b1, and 0.55≤b1≤0.6.

9. The electrochemical apparatus according to any one of claims 1-8, **characterized in that**, the first lithium manganese oxide has a layered structure.

10. The electrochemical apparatus according to any one of claims 1-9, **characterized in that**, the first lithium manganese oxide comprises element T, wherein the element T comprises at least one selected from the group consisting of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, and Y; a molar ratio of the element T to element Mn in the first lithium manganese oxide is c1, and 0.005≤c1≤0.1.

11. The electrochemical apparatus according to any one of claims 1-10, **characterized in that**, the first lithium manganese oxide comprises Liₓ₁Mn_{y1}T_{z1}O₂, wherein 0.1≤x1≤1.1, 0.9≤y1≤1, 0≤z1≤ 0.1, and T comprises at least one selected from the group consisting of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, and Y.

12. The electrochemical apparatus according to any one of claims 1-11, **characterized in that**, the second lithium manganese oxide has a spinel structure.

13. The electrochemical apparatus according to any one of claims 1-12, **characterized in that**, the second lithium manganese oxide comprises element Q, wherein the element Q comprises at least one selected from the group consisting of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, and Y; a molar ratio of the element Q to element Mn in the second lithium manganese oxide is d1, and 0≤d1≤0.2.

14. The electrochemical apparatus according to any one of claims 1-13, **characterized in that**, the second lithium manganese oxide comprises Liₓ₂Mn_{y2}Q_{z2}O₄₋ₜAₜ, wherein 0.6≤x2≤1.2, 1.8≤y2≤2, 0≤z2≤0.2, 0≤t≤0.5, Q comprises at least one selected from the group consisting of Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W, and Y; and A comprises at least one selected from the group consisting of S, N, F, Cl, and Br.

15. An electrical apparatus, **characterized in that**, the electrical apparatus comprises the electrochemical apparatus according to any one of claims 1 to 14.

## Patentansprüche

1. Elektrochemische Vorrichtung, umfassend eine positive Elektrodenplatte, wobei die positive Elektrodenplatte eine positive Elektroden-Aktivmaterialschicht umfasst, und **dadurch gekennzeichnet, dass** die positive Elektroden-Aktivmaterialschicht ein erstes Lithiummanganoxid und ein zweites Lithiummanganoxid umfasst; und wobei in einem vollständig entladenen Zustand der elektrochemischen Vorrichtung ein Raman-Spektrum des ersten Lithiummanganoxids einen charakteristischen Peak A im Bereich von 507 cm⁻¹ ± 10 cm⁻¹ und einen charakteristischen Peak B im Bereich von 660 cm⁻¹ ± 10 cm⁻¹ aufweist, und ein Raman-Spektrum des zweiten Lithiummanganoxids einen charakteristischen Peak C im Bereich von 625 cm⁻¹ ± 10 cm⁻¹ aufweist.

2. Elektrochemische Vorrichtung nach Anspruch 1, **dadurch gekennzeichnet, dass** eine Peakintensität des charakteristischen Peaks A I_{A} ist und eine Peakintensität des charakteristischen Peaks B I_{B} ist, und 0,4 ≤ I_{A}/I_{B} ≤ 0,75.

3. Elektrochemische Vorrichtung nach Anspruch 1 oder 2, **dadurch gekennzeichnet, dass** in dem vollständig entladenen Zustand der elektrochemischen Vorrichtung das Raman-Spektrum des ersten Lithiummanganoxids einen charakteristischen Peak im Bereich von 570 cm⁻¹ ± 10 cm⁻¹ aufweist.

4. Elektrochemische Vorrichtung nach einem der Ansprüche 1 bis 3, **dadurch gekennzeichnet, dass** in dem vollständig entladenen Zustand der elektrochemischen Vorrichtung das Raman-Spektrum des zweiten Lithiummanganoxids einen charakteristischen Peak im Bereich von 480 cm⁻¹ ± 10 cm⁻¹ aufweist.

5. Elektrochemische Vorrichtung nach einem der Ansprüche 1 bis 4, **dadurch gekennzeichnet, dass** in dem vollständig entladenen Zustand der elektrochemischen Vorrichtung ein Testbereich von 60 µm × 50 µm aus einem Querschnitt der positiven Elektrodenplatte ausgewählt wird; und dass in einem Raman-Spektrum des Testbereichs eine Peakintensität des charakteristischen Peaks B I_{B} ist und eine Peakintensität des charakteristischen Peaks C I_{C} ist, und 0,06 ≤ I_{B}/I_{C} ≤ 0,5.

6. Elektrochemische Vorrichtung nach Anspruch 5, **dadurch gekennzeichnet, dass** 0,1 ≤ I_{B}/I_{C} ≤ 0,5.

7. Elektrochemische Vorrichtung nach einem der Ansprüche 1 bis 6, **dadurch gekennzeichnet, dass** in dem vollständig entladenen Zustand der elektrochemischen Vorrichtung ein Röntgenbeugungsmuster der positiven Elektrodenplatte einen ersten Beugungspeak und einen zweiten Beugungspeak in einem 2θ-Bereich von 18,5° bis 19,5° aufweist, und eine Peakpositionsdifferenz des zweiten Beugungspeaks und des ersten Beugungspeaks Δθ ist, und 0,38° ≤ |Δθ| ≤ 0,48°.

8. Elektrochemische Vorrichtung nach einem der Ansprüche 1 bis 7, **dadurch gekennzeichnet, dass** in dem vollständig entladenen Zustand der elektrochemischen Vorrichtung ein Molverhältnis des Elements Li zu dem Element Mn in der positiven Elektroden-Aktivmaterialschicht b1 ist, und 0,55 ≤ b1 ≤ 0,6.

9. Elektrochemische Vorrichtung nach einem der Ansprüche 1 bis 8, **dadurch gekennzeichnet, dass** das erste Lithiummanganoxid eine Schichtstruktur aufweist.

10. Elektrochemische Vorrichtung nach einem der Ansprüche 1 bis 9, **dadurch gekennzeichnet, dass** das erste Lithiummanganoxid das Element T umfasst, wobei das Element T mindestens eines umfasst, ausgewählt aus der Gruppe bestehend aus Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W und Y; wobei ein Molverhältnis des Elements T zu dem Element Mn in dem ersten Lithiummanganoxid c1 ist, und 0,005 ≤ c1 ≤ 0,1.

11. Elektrochemische Vorrichtung nach einem der Ansprüche 1 bis 10, **dadurch gekennzeichnet, dass** das erste Lithiummanganoxid Liₓ₁Mn_{y1}T_{z1}O₂ umfasst, wobei 0,1 ≤ x1 ≤ 1,1, 0,9 ≤ y1 ≤ 1, 0 ≤ z1 ≤ 0,1, und T mindestens eines umfasst, ausgewählt aus der Gruppe bestehend aus Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W und Y.

12. Elektrochemische Vorrichtung nach einem der Ansprüche 1 bis 11, **dadurch gekennzeichnet, dass** das zweite Lithiummanganoxid eine Spinellstruktur aufweist.

13. Elektrochemische Vorrichtung nach einem der Ansprüche 1 bis 12, **dadurch gekennzeichnet, dass** das zweite Lithiummanganoxid das Element Q umfasst, wobei das Element Q mindestens eines umfasst, ausgewählt aus der Gruppe bestehend aus Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W und Y; wobei ein Molverhältnis des Elements Q zu dem Element Mn in dem zweiten Lithiummanganoxid d1 ist, und 0 ≤ d1 ≤ 0,2.

14. Elektrochemische Vorrichtung nach einem der Ansprüche 1 bis 13, **dadurch gekennzeichnet, dass** das zweite Lithiummanganoxid Liₓ₂Mn_{y2}Q_{z2}O₄₋ₜAₜ umfasst, wobei 0,6 ≤ x2 ≤ 1,2, 1,8 ≤ y2 ≤ 2, 0 ≤ z2 ≤ 0,2, 0 ≤ t ≤ 0,5, Q mindestens eines umfasst, ausgewählt aus der Gruppe bestehend aus Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W und Y, und A mindestens eines umfasst, ausgewählt aus der Gruppe bestehend aus S, N, F, Cl und Br.

15. Elektrische Vorrichtung, **dadurch gekennzeichnet, dass** die elektrische Vorrichtung die elektrochemische Vorrichtung nach einem der Ansprüche 1 bis 14 umfasst.

## Revendications

1. Appareil électrochimique, comprenant une plaque d'électrode positive, dans lequel la plaque d'électrode positive comprend une couche de matériau actif d'électrode positive, et **caractérisé en ce que** la couche de matériau actif d'électrode positive comprend un premier oxyde de lithium-manganèse et un deuxième oxyde de lithium-manganèse ; et, dans un état totalement déchargé de l'appareil électrochimique, un spectre Raman du premier oxyde de lithium-manganèse présente un pic caractéristique A dans une plage de 507 cm⁻¹ ± 10 cm⁻¹ et un pic caractéristique B dans une plage de 660 cm⁻¹ ± 10 cm⁻¹, et un spectre Raman du deuxième oxyde de lithium-manganèse présente un pic caractéristique C dans une plage de 625 cm⁻¹ ± 10 cm⁻¹.

2. Appareil électrochimique selon la revendication 1, **caractérisé en ce qu'**une intensité de pic du pic caractéristique A est I_{A} et une intensité de pic du pic caractéristique B est I_{B}, et 0,4 ≤ I_{A}/I_{B} ≤ 0,75.

3. Appareil électrochimique selon la revendication 1 ou 2, **caractérisé en ce que**, dans l'état totalement déchargé de l'appareil électrochimique, le spectre Raman du premier oxyde de lithium-manganèse présente un pic caractéristique dans une plage de 570 cm⁻¹ ± 10 cm⁻¹.

4. Appareil électrochimique selon l'une quelconque des revendications 1 à 3, **caractérisé en ce que**, dans l'état totalement déchargé de l'appareil électrochimique, le spectre Raman du deuxième oxyde de lithium-manganèse présente un pic caractéristique dans une plage de 480 cm⁻¹ ± 10 cm⁻¹.

5. Appareil électrochimique selon l'une quelconque des revendications 1 à 4, **caractérisé en ce que**, dans l'état totalement déchargé de l'appareil électrochimique, une région de test de 60 µm × 50 µm est sélectionnée dans une section transversale de la plaque d'électrode positive ; et, dans un spectre Raman de la région de test, une intensité de pic du pic caractéristique B est I_{B} et une intensité de pic du pic caractéristique C est I_{C}, et 0,06 ≤ I_{B}/I_{C} ≤ 0,5.

6. Appareil électrochimique selon la revendication 5, **caractérisé en ce que** 0,1 ≤ I_{B}/I_{C} ≤ 0,5.

7. Appareil électrochimique selon l'une quelconque des revendications 1 à 6, **caractérisé en ce que**, dans l'état totalement déchargé de l'appareil électrochimique, un diagramme de diffraction des rayons X de la plaque d'électrode positive présente un premier pic de diffraction et un deuxième pic de diffraction dans une plage de 2θ de 18,5° à 19,5°, et une différence de position de pic du deuxième pic de diffraction et du premier pic de diffraction est Δθ, et 0,38° ≤ |Δθ| ≤ 0,48°.

8. Appareil électrochimique selon l'une quelconque des revendications 1 à 7, **caractérisé en ce que**, dans l'état totalement déchargé de l'appareil électrochimique, un rapport molaire de l'élément Li à l'élément Mn dans la couche de matériau actif d'électrode positive est b1, et 0,55 ≤ b1 ≤ 0,6.

9. Appareil électrochimique selon l'une quelconque des revendications 1 à 8, **caractérisé en ce que** le premier oxyde de lithium-manganèse présente une structure en couches.

10. Appareil électrochimique selon l'une quelconque des revendications 1 à 9, **caractérisé en ce que** le premier oxyde de lithium-manganèse comprend l'élément T, l'élément T comprenant au moins un élément choisi dans le groupe constitué de Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W et Y ; un rapport molaire de l'élément T à l'élément Mn dans le premier oxyde de lithium-manganèse est c1, et 0,005 ≤ c1 ≤ 0,1.

11. Appareil électrochimique selon l'une quelconque des revendications 1 à 10, **caractérisé en ce que** le premier oxyde de lithium-manganèse comprend Liₓ₁Mn_{y1}T_{z1}O₂, où 0,1 ≤ x1 ≤ 1,1, 0,9 ≤ y1 ≤ 1, 0 ≤ z1 ≤ 0,1, et T comprend au moins un élément choisi dans le groupe constitué de Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W et Y.

12. Appareil électrochimique selon l'une quelconque des revendications 1 à 11, **caractérisé en ce que** le deuxième oxyde de lithium-manganèse présente une structure spinelle.

13. Appareil électrochimique selon l'une quelconque des revendications 1 à 12, **caractérisé en ce que** le deuxième oxyde de lithium-manganèse comprend l'élément Q, l'élément Q comprenant au moins un élément choisi dans le groupe constitué de Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W et Y ; un rapport molaire de l'élément Q à l'élément Mn dans le deuxième oxyde de lithium-manganèse est d1, et 0 ≤ d1 ≤ 0,2.

14. Appareil électrochimique selon l'une quelconque des revendications 1 à 13, **caractérisé en ce que** le deuxième oxyde de lithium-manganèse comprend Liₓ₂Mn_{y2}Q_{z2}O₄₋ₜAₜ, où 0,6 ≤ x2 ≤ 1,2, 1,8 ≤ y2 ≤ 2, 0 ≤ z2 ≤ 0,2, 0 ≤ t ≤ 0,5, Q comprend au moins un élément choisi dans le groupe constitué de Al, Nb, Ti, Cr, Mg, V, Cu, Zr, Mo, La, Zn, Ga, Ru, Ag, Sn, Au, Ce, Pr, Nd, Sm, Gd, Fe, Co, Ni, W et Y, et A comprend au moins un élément choisi dans le groupe constitué de S, N, F, Cl et Br.

15. Appareil électrique, **caractérisé en ce que** l'appareil électrique comprend l'appareil électrochimique selon l'une quelconque des revendications 1 à 14.
